## Europäisches Patentamt

## European Patent Office

## Office européen des brevets

(19)

(11) Veröffentlichungsnummer: **0 087 065**
**B1**

(12) EUROPÄISCHE PATENTSCHRIFT

(45) Veröffentlichungstag der Patentschrift:
25.09.85

(21) Anmeldenummer: 83101225.7

(22) Anmeldetag: 09.02.83

(51) Int. Cl.⁴: **C 01 B 25/238**

(54) Verfahren zur Verminderung des Schwermetallgehaltes im Rohphosphat.

(30) Priorität: 12.02.82 DE 3204963
23.03.82 DE 3210575

(43) Veröffentlichungstag der Anmeldung:
31.08.83 Patentblatt 83/35

(45) Bekanntmachung des Hinweises auf die Patenterteilung:
25.09.85 Patentblatt 85/39

(84) Benannte Vertragsstaaten:
BE DE FR IT NL SE

(56) Entgegenhaltungen:
EP - A - 0 023 195
DE - B - 2 447 390

Chemical Abstracts Band 89, Nr. 22, 27. November 1978, Columbus, Ohio, USA, Seite 109, Abstract Nr. 181887a
Chemical Abstracts, Band 96, Nr. 13, 29. März 1982, Columbus, Ohio, USA, D. SAUERBECK et al. "Cadmium contamination of mineral fertilizers depending on raw material and production processes", Seite 609, abstract no. 103081p

(73) Patentinhaber: HOECHST AKTIENGESELLSCHAFT, Postfach 80 03 20, D-6230 Frankfurt am Main 80 (DE)
Patentinhaber: Uhde GmbH,
Friedrich-Uhde-Strasse 15 Postfach 262,
D-4600 Dortmund 1 (DE)

(72) Erfinder: Wolstein, Friedrich, Dr., Goethe-Strasse 66, D-4300 Essen (DE)
Erfinder: Baechle, Hans-Tuisko, Dr., Am Rech 1, D-6246 Glashütten/Taunus (DE)
Erfinder: von Plessen, Helmold, Dr., Kugelherrnstrasse 16, D-6240 Königstein/Taunus (DE)
Erfinder: Orth, Adolf Ferdinand, Dr., Habichtsweg 7, D-6232 Bad Soden am Taunus (DE)

(74) Vertreter: Tergau, Ulrich, Dr. et al, HOECHST AKTIENGESELLSCHAFT Zentrale Patentabteilung Postfach 80 03 20, D-6230 Frankfurt am Main 80 (DE)

## Beschreibung

Die Erfindung betrifft ein Verfahren zur Säurebehandlung von Rohphosphat unter Verminderung des Schwermetall-Gehaltes, insbesondere zur Entfernung von Cadmiumverbindungen.

Der Verminderung des Gehaltes an Schwermetall bei Rohphosphaten ist in der Literatur noch wenig Aufmerksamkeit geschenkt worden. Das Entfernen anderer, nicht gewünschter Stoffe, wie z.B. Magnesiumverbindungen, ist bekannt (siehe beispielsweise DE-A 28 13 358). Bei der bisher bekannten Behandlung des Rohphosphates mit Säure wie $H_2SO_4$ gehen die unerwünschten Schwermetalle mit in Lösung über und lassen sich daher nur schwer oder gar nicht aus dem System entfernen (siehe beispielsweise EP-A 0 023 195).

Die Säurebehandlung des Rohphosphats bewirkt ein Anlösen des Rohphosphats. Es werden im erfindungsgemässen Verfahren die hierfür bekannten Säuren, insbesondere 30-70%ige Salpetersäure eingesetzt.

Die Aufgabe der Erfindung bestand darin, eine Lösung herzustellen, mit der bei dem eingangs bezeichneten Verfahren die Entfernung von Schwermetallen aus Rohphosphat in wirtschaftlicher Weise möglich ist.

Dies wird durch die im kennzeichnenden Teil des Anspruchs 1 dargestellten Massnahmen gelöst.

Es hat sich gezeigt, dass mit der Erfindung erreicht wird, dass nach der pH-Wert-Einstellung das abgetrennte Rohphosphat weitgehend schwermetallfrei ist, wobei insbesondere ein nachhaltiger $P_2O_5$-Verlust vermieden wird.

Da, wie bekannt, Rohphosphate, je nach Abbaugebieten, sehr unterschiedliche Zusammensetzungen haben können, ist es entweder notwendig, Calcium-Ionen von aussen dem System zuzuführen oder es reicht aus, die im Rohphosphat durch den Säureaufschluss entstehenden Calcium-Ionen für die erfindungsgemässe Verfahrensweise einzusetzen.

In einer bevorzugten Ausführungsform der Erfindung ist vorgesehen, dass eine Calciumnitratlösung zugegeben wird, insbesondere dann, wenn das eingesetzte Rohphosphat keine oder so geringe Mengen an Calcium enthält, dass eine ausreichende Calcium-Ionen-Ausbeute nicht gewährleistet ist.

Im Prozess werden diese Calcium-Ionen insbesondere zur Bildung des lagerfähigen Apatits herangezogen, das die gewünschte Schwermetallanreicherung nach der erfindungsgemässen Verfahrensweise erfährt.

Vorteilhaft ist es, wenn eine Calciumnitratlösung in der Konzentration von 10-50 Gew.-% zugegeben wird.

Die Erfindung sieht auch vor, dass zur Einstellung des pH-Wertes alle sauren Lösungen, insbesondere Salpetersäure oder Phosphorsäure oder Salzsäure oder deren Gemische, eingesetzt werden.

Eine zusätzliche und vorteilhafte Ausgestaltung der Erfindung besteht darin, dass nach Abtrennung des behandelten Rohphosphates in einer weiteren Stufe c) eine Neutralisation der die Schwermetalle enthaltenden Lösung erfolgt.

Grundsätzlich kann diese Neutralisation mit jedem Neutralisationsmittel vorgenommen werden, allerdings ist es besonders vorteilhaft, wenn die Neutralisation mittels Calciumhydroxid erfolgt. Dadurch wird erreicht, dass $Ca_3(PO_4)_2$ zusammen mit den Schwermetallen z.B. als Apatit gebildet wird, welches entweder einer Endlagerung oder einer weiteren Aufarbeitung zuführbar ist, und sich gleichzeitig Calciumnitrat bildet, welches bei einem entsprechend geführten Prozess an den Prozessbeginn wieder rückgeführt werden kann. Dieses vorstehend beschriebene Verfahren sei im folgenden als Verfahren A bezeichnet.

In weiterer Ausgestaltung der Erfindung können in der Stufe c) die Schwermetalle aus der zurückbleibenden Lösung vorteilhaft als Sulfide mit Hilfe von Schwefelwasserstoff gefällt werden. Zweckmässigerweise wird $H_2S$ in die Lösung eingeleitet.

Diese Verfahrensvariante (Verfahren B, Fällung der Schwermetalle als Sulfide) stellt eine weitere wirtschaftliche Möglichkeit der Entfernung der Schwermetalle dar. Auch bei diesem Verfahren kann Calciumnitrat im Kreislauf geführt werden.

Die die Schwermetalle enthaltende Lösung kann auch in der Weise weiterbehandelt werden, dass in der Stufe c) die Schwermetalle aus der Lösung mit einem Extraktionsmittel extrahiert werden.

Diese erfindungsgemässe Verfahrensvariante (Verfahren C) ist dadurch gekennzeichnet, dass als Extraktionsmittel ein Dithiophosphorsäure-O,O-diester, ein Dithiophosphonsäure-O-ester oder eine Dithiophosphinsäure ggf. in Anwesenheit eines organischen Verdünnungsmittels eingesetzt wird.

Die Zugabe eines organischen Verdünnungsmittels hat den Vorteil, dass die Verluste des Extraktionsmittels gering gehalten werden, die Calciumnitratlösung somit vorteilhaft im Kreislauf geführt werden kann.

Als organische Verdünnungsmittel können auch Verbindungen benutzt werden, die teilweise in Wasser löslich sind, die sich aber aufgrund einer Mischungslücke im System Calciumnitratlösung/org. Extraktionsmittel und aufgrund hinreichend unterschiedlicher Dichte leicht von einer Calciumnitratlösung trennen lassen. Dies gelingt z.B. bei Einsatz von Alkoholen mit mehr als 2 Kohlenstoffatomen.

Zur Eliminierung von Cadmium aus der abgetrennten Lösung können den obengenannten Extraktionsmitteln auch Absorptionsmittel zugegeben werden.

Das vorliegende Extraktionsverfahren unterscheidet sich von bekannten Verfahren grundsätzlich dadurch, dass die wässerige Phase nicht, wie bei bekannten Extraktionsverfahren, nach Abtrennung des Extraktionsmittels abgeleitet wird, so dass es nicht zu Verlusten an Extraktionsmittel in dieser Phase kommt.

Die Erfindung ist in den folgenden Beispielen anhand vereinfachter Prozessschaubilder näher erläutert. Dabei zeigt in der anliegenden Zeichnung:

Fig. 1 die Prozessführung gemäss Verfahren A,

Fig. 2 die Prozessführung gemäss Verfahren B und

Fig. 3 die Prozessführung gemäss Verfahren C.

Die Verfahren sind schematisch dargestellt, ohne verfahrenstechnische Einzelheiten zu berücksichtigen.

In diesen Schaubildern symbolisieren die eingezeichneten Kästchen die Systembereiche.

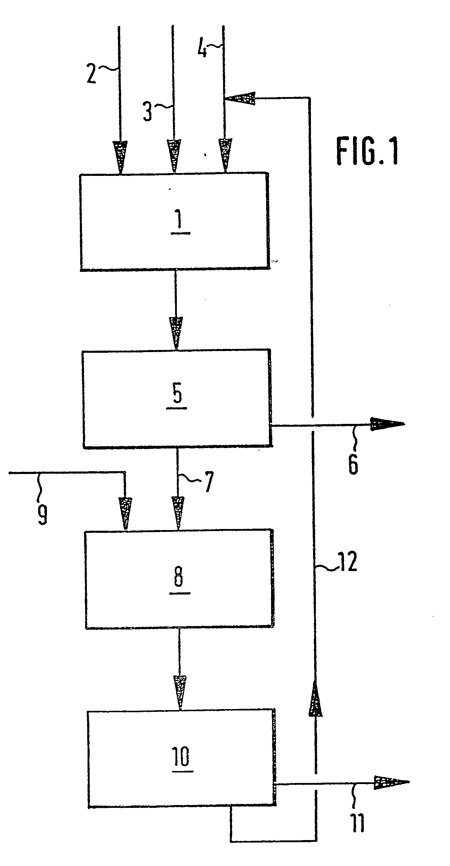

*Beispiel 1* (Verfahren A, Fig. 1)

Fig. 1 zeigt, dass dem Systembereich 1 Rohphosphat, Salpetersäure und Calciumnitratlösung zugeführt werden; dies wird mit den Pfeilen 2, 3 und 4 angedeutet. Im Systembereich 1 findet die erfindungsgemässe Systemeinstellung im Säurebereich nach Verfahren A statt. Das entstehende Gemisch wird abgezogen und der Abtrennung, z.B. der Filtration, zugeführt, was mit dem Systembereich 5 angedeutet ist.

Das behandelte, schwermetallarme Rohphosphat wird weiteren Bearbeitungsstufen zugeführt. Diese Systemstelle ist mit dem Pfeil 6 bezeichnet. Die die Schwermetalle und deren Verbindungen enthaltende zurückbleibende Lösung aus dem Systembereich 5 wird über den Prozessweg 7 dem Systembereich 8 zugeführt.

Bis zu diesem Punkt sind alle Prozessführungen gemäss Fig. 1-3 gleich. Alle Bezugsziffern sind insofern auch gleich gewählt.

Gemäss Verfahren A der Erfindung wird im Systembereich 8 die Neutralisation vorgenommen, z.B. wird Calciumhydroxid zugeführt, was mit dem Pfeil 9 angedeutet ist. Hier kann z.B. ein pH-Wert von 7 eingestellt werden. Durch die Neutralisation im Systembereich 8 bildet sich beispielsweise Apatit mit dem Schwermetall, die voneinander getrennt werden, sowie Calciumnitratlösung, was mit dem Systembereich 10 angedeutet ist. Das lagerfähige Apatit wird bei 11 dem System entzogen, das entsprechende Calciumnitrat wird über den Prozessweg 12 an den Prozessanfang zurückgeführt.

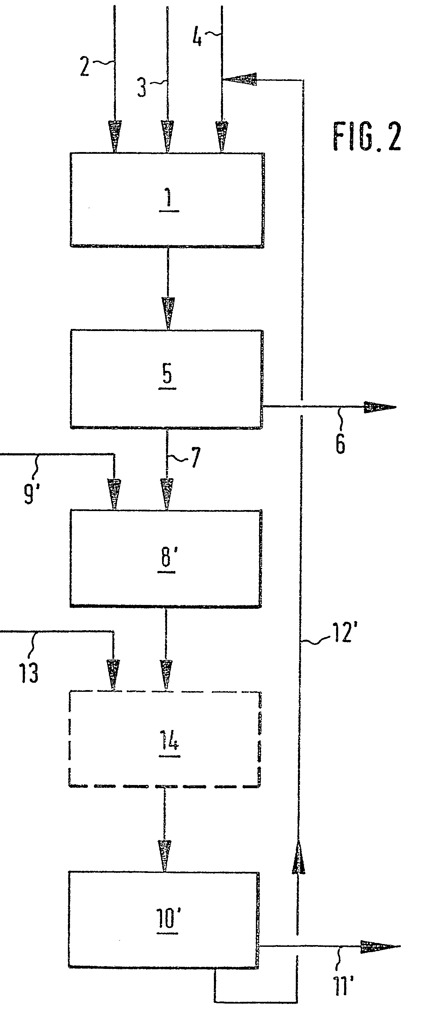

*Beispiel 2* (Verfahren B, Fig. 2)

Zum Verfahren bis Systembereich 8' siehe Beispiel 1.

In Abwandlung sieht die Verfahrensvariante (B) im Systembereich 8' nicht die Neutralisation wie im Verfahren A vor, sondern die Fällung der Schwermetalle als Sulfide durch Zugabe von Schwefelwasserstoff; dies wird durch Pfeil 9' angedeutet. Falls die Calciumnitratlösung einen pH-Wert kleiner als 0,9 aufweist, sollte sich an dieser Stelle eine Vorneutralisation entsprechend Verfahren A d. h., z.B. durch Zugabe von Ca (OH)$_2$, anschliessen, was mit dem Pfeil 13 und dem gestrichelt eingezeichneten Systembereich 14 angedeutet ist.

An diesen Bereich schliesst sich die Trennung von dem aus einem Teil der gelösten Phosphorsäure stammenden Calciumphosphat samt den Schwermetallen einerseits und der im Kreislauf über dem Prozessweg 12' geführten Calciumnitratlösung andererseits an. Der Abzug der Schwermetalle und des Calciumphosphates ist mit dem Pfeil 11' angedeutet.

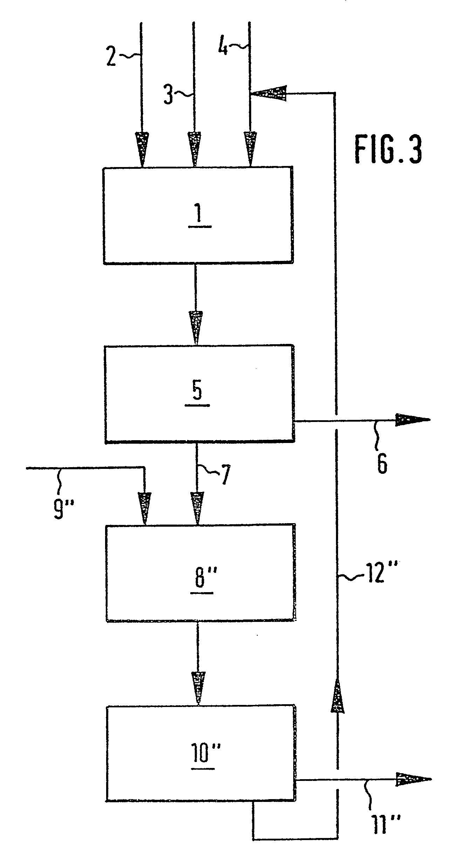

*Beispiel 3* (Verfahren C, Fig. 3)

Zum Verfahren bis Systembereich 8'' siehe Beispiel 1.

Im Prozessschaubild 3 wird im Systembereich 8'' ein mit dem Pfeil 9'' angedeutetes Extraktionsmittel dem System zugeführt. Hieran schliesst sich die Phasenabtrennung im Systembereich 10'' an, wonach die Calciumnitratlösung über den Prozessweg 12'' rückgeführt wird und die Abtrennung der Schwermetalle, angedeutet durch den Pfeil 11'', erfolgt.

Die voranstehenden Prozessbeispiele bedeuten keine Einschränkung der Erfindung. Die Prozessführungen und die eingesetzten Mittel können in vielfacher Hinsicht gemäss der allgemeinen Beschreibung der Erfindung variiert werden. So können einige dargestellte Systembereiche verfahrenstechnisch zusammengefasst werden. Auf die Rückführung des Calciumnitrates kann verzichtet werden, wenn am Prozessbeginn durch das eingesetzte Rohphosphat eine ausreichende Konzentration an Calcium-Ionen gewährleistet ist.

*Zu Beispiel 1 und 2*

Wendet man das Verfahren gemäss Beispiel 1 auf das sogenannte Khouribga-Rohphosphat aus Marokko an, das einen Cadmiumgehalt von 14 mg Cadmium pro kg Rohphosphat aufweist, so erhält man bei einem Mischungsverhältnis von Rohphosphat zu 60%iger Salpetersäure im Verhältnis 1:1 folgende Cadmiumkonzentrationen in der nach Abfiltration des Rohphosphates verbleibenden Lösung

bei pH 1,5: 9 mg Cd pro Liter Lösung

bei pH 2: 7 mg Cd pro Liter Lösung

bei pH 2,5: 5 mg Cd pro Liter Lösung

Fällt man aus diesen Lösungen das Cadmium durch Einleiten von H$_2$S verbleiben in den Lösungen jeweils weniger als 0,1 mg Cd pro Liter.

Die gleiche Abreicherung erzielt man, wenn das Cadmium aus dieser Lösung durch Zugabe von Calciumhydroxid zusammen mit dem sich bildenden Apatit ausgefällt wird.

Setzt man dem obengenannten Rohphosphat zusätzlich zur Salpetersäure noch 40%ige Calciumnitratlösung hinzu und stellt den pH mittels Salpetersäure auf einen Wert von 2,0 ein (Gesamtverhältnis Flüssigkeit zu Rohphosphat = 2:1), so erhält man nach Abtrennen des Rohphosphats durch Filtration eine Konzentration von 10 mg Cd/Liter in der zurückbleibenden Lösung.

**Patentansprüche**

1. Verfahren zur Säurebehandlung von Rohphosphat unter Verminderung des Schwermetall-Gehalts, insbesondere von Cadmiumverbindungen, dadurch gekennzeichnet, dass a) dem Rohphosphat in Anwesenheit von Ca-Ionen Säure bis

zu einem pH-Wert von 0,2 bis 3 zugesetzt wird, wobei die Ca-Ionen durch Säurebehandlung aus dem Rohphosphat entstehen und/oder die Ca-Ionen zusätzlich zugegeben werden und ein Gewichtsverhältnis Rohphosphat zu Ca-Ionen enthaltender Säure von 0,3 bis 3,0:1 eingestellt wird, und b) das im Schwermetall-Gehalt verminderte Rohphosphat von der Ca-Ionen und diesen Schwermetall-Anteil enthaltenden Säure abgetrennt wird.

2. Verfahren nach Anspruch 1, dadurch gekennzeichnet, dass zur Säurebehandlung Salpetersäure, Phosphorsäure und/oder Salzsäure zugesetzt wird.

3. Verfahren nach Anspruch 1 oder 2, dadurch gekennzeichnet, dass die Ca-Ionen in Form einer 10 bis 50 gew.-%igen Calciumnitratlösung zugegeben werden.

4. Verfahren nach einem der Ansprüche 1 bis 3, dadurch gekennzeichnet, dass in einer weiteren Stufe c) eine Neutralisation der abgetrennten Säure aus der Stufe b) erfolgt.

5. Verfahren nach einem der Ansprüche 1 bis 3, dadurch gekennzeichnet, dass in einer weiteren Stufe c) aus der abgetrennten Säure die Schwermetalle mit $H_2S$ als Sulfide gefällt werden.

6. Verfahren nach einem der Ansprüche 1 bis 3, dadurch gekennzeichnet, dass in einer weiteren Stufe c) die Schwermetalle aus der abgetrennten Säure mit einem Extraktionsmittel extrahiert werden.

7. Verfahren nach einem der Ansprüche 4 bis 6, dadurch gekennzeichnet, dass in der Stufe a) Salpetersäure zugesetzt und die nach Durchführung der Stufe c), gegebenenfalls nach Abtrennung von Feststoffen, vorliegende Calciumnitratlösung im Kreislauf geführt wird.

## Claims

1. A process for treating crude phosphate by an acid lowering the heavy metal content, especially the content of cadmium compounds, wherein a) an acid is added to the crude phosphate in the presence of Ca-ions up to a pH value of 0.2 to 3 whereby the Ca-ions are formed from the crude phosphate by acid treatment and/or additional Ca-ions are added and a weight ratio of the crude phosphate to the acid containing Ca-ions of 0.3 to 3.0:1 is adjusted, and b) the crude phosphate having a lowered heavy metal content is separated from the acid containing the Ca-ions and that of heavy metals.

2. A process according to claim 1 wherein nutric acid, phosphoric acid and/or hydrochloric acid is added during the acid treatment.

3. A process according to claim 1 or 2 wherein the Ca-ions are added as a 10 to 50% (b.w.) calcium nitrate solution.

4. A process according to claims 1 to 3 wherein via a further step c) a neutralization reaction of the separated acid from step b) is performed.

5. A process according to claims 1 to 3 wherein via a further step c) the heavy metals are precipitated from the separated acid as sulfides by means of hydrogen sulfide.

6. A process according to claims 1 to 3 wherein via a further step c) the heavy metals are extracted from the separated acid by means of an extracting agent.

7. A process according to claims 4 to 6 wherein nutric acid is added in step a) and the calcium-nitrate solution obtained after having effected step c) and optionally having separated solids is recycled.

## Revendications

1. Procédé pour traiter par un acide du phosphate brut, avec diminution de la teneur en métal lourd, en particulier des composés du cadmium, procédé caractérisé en ce que a) on ajoute au phosphate brut, en présence d'ions Ca, de l'acide jusqu'à un pH de 0,2 à 3, de sorte que, par le traitement à l'acide, les ions calcium sont extraits du phosphate brut et/ou l'on ajoute en supplément les ions calcium et l'on ajuste à un rapport pondéral du phosphate brut à l'acide contenant des ions calcium compris entre 0,3 et 3,0:1, et b) on sépare le phosphate brut, à teneur réduite en métal lourd, des ions Ca et de l'acide contenant cette fraction de métaux lourds.

2. Procédé selon la revendication 1, caractérisé en ce qu'on utilise, pour le traitement à l'acide, de l'acide nitrique, de l'acide phosphorique et/ou de l'acide chlorhydrique.

3. Procédé selon la revendication 1 ou 2, caractérisé en ce qu'on ajoute les ions Ca sous la forme d'une solution contenant 10 à 50% en poids de nitrate de calcium.

4. Procédé selon l'une des revendications 1 à 3, caractérisé en ce que, dans une étape supplémentaire c), on effectue une neutralisation de l'acide séparé provenant de l'étape b).

5. Procédé selon l'une des revendications 1 à 3, caractérisé en ce que, dans une étape supplémentaire c), on précipite à l'aide de $H_2S$, sous forme de sulfures, les métaux lourds de l'acide séparé.

6. Procédé selon l'une des revendications 1 à 3, caractérisé en ce que, dans une étape supplémentaire c), on extrait, à l'aide d'un agent d'extraction, les métaux lourds de l'acide séparé.

7. Procédé selon l'une des revendications 4 à 6, caractérisé en ce que, dans l'étape a), on ajoute de l'acide nitrique et l'on recycle, éventuellement après séparation des solides, la solution de nitrate de calcium présente après réalisation de l'étape c).

FIG.1

FIG.2

FIG.3